(19) **Europäisches Patentamt / European Patent Office / Office européen des brevets**

(11) **EP 1 429 133 B1**

(12) # EUROPÄISCHE PATENTSCHRIFT

(45) Veröffentlichungstag und Bekanntmachung des Hinweises auf die Patenterteilung:
**02.05.2012 Patentblatt 2012/18**

(51) Int Cl.:
*G01F 9/00* (2006.01)     *G01M 17/007* (2006.01)

(21) Anmeldenummer: **02102716.4**

(22) Anmeldetag: **11.12.2002**

(54) **Verfahren zum Vergleich des Verbrauchs von Kraftfahrzeugen**

Method of comparing fuel consumption of vehicles

Procédé pour comparer la consommation de carburant des véhicules

(84) Benannte Vertragsstaaten:
**DE FR GB**

(43) Veröffentlichungstag der Anmeldung:
**16.06.2004 Patentblatt 2004/25**

(73) Patentinhaber: **Ford Global Technologies, LLC Dearborn, MI 48126 (US)**

(72) Erfinder:
• **Schaefer, Horst**
  **50769, Koeln (DE)**

• **Oettershagen, Uwe**
  **51645, Gummersbach (DE)**

(74) Vertreter: **Drömer, Hans-Carsten et al**
**Ford-Werke Aktiengesellschaft**
**Patentabteilung NH/DRP**
**Henry-Ford-Strasse 1**
**50725 Köln (DE)**

(56) Entgegenhaltungen:
**WO-A-00/62211    DE-A- 10 144 699**
**US-A- 5 686 651**

EP 1 429 133 B1

**Beschreibung**

Die Erfindung betrifft ein Verfahren zum differenzierten Vergleich des Kraftstoffverbrauchs eines Testfahrzeugs mit demjenigen mindestens eines Vergleichsfahrzeugs.

Aus dem Dokument WO 00/62211 ist ein Verfahren zur Minimierung des Gesamt-Schadstoffausstoßes einer unterschiedliche Kraftfahrzeuge aufweisenden Kraftfahrzeugflotte bekannt, bei dem folgende Schritte durchgeführt werden:

Ermitteln charakteristischer Eigenschaften, z. B. Leistung, Ladefähigkeit und Verfügbarkeit jedes Kraftfahrzeugs der Kraftfahrzeugflotte; Durchführen einer Analyse der von den Kraftfahrzeugen der Kraftfahrzeugflotte zu erfüllenden Aufgabe; Priorisierung dieser Aufgaben sowie Zuweisen der Aufgaben an die einzelnen Kraftfahrzeuge unter Berücksichtigung der Ergebnisse vorstehender Verfahrensschritte mit dem Ziel einer Minimierung des Gesamt-Schadstoffausstoßes dieser Kraftfahrzeugflotte.

Bei der Entwicklung neuer Kraftfahrzeuge kommt dem Aspekt der Minimierung des Kraftstoffverbrauchs eines nachfolgend als Testfahrzeug bezeichneten Kraftfahrzeugs eine hohe Bedeutung zu. Um zwei verschiedene Fahrzeugtypen bewertend miteinander zu vergleichen, ist daher insbesondere auch eine Gegenüberstellung ihrer jeweiligen Kraftstoffverbrauchswerte erforderlich. Dabei kann ohne größeren Aufwand (z. B. Einbau von Motoren in "fremde" Karosserien) nur pauschal der Gesamtkraftstoffverbrauch eines bestimmten Fahrzeuges ermittelt werden, wenn dieses nach einem vorgegebenen Fahr- beziehungsweise Geschwindigkeitsprogramm bewegt wird.

Um die Entwicklung von Kraftfahrzeugen im Hinblick auf eine Minimierung des Kraftstoffverbrauchs voranzutreiben, wäre es jedoch wünschenswert, den Einfluss unterschiedlicher Komponenten - wie etwa der Karosserie (Luftwiderstand, Rollwiderstand), des Antriebsstrangs (Kupplung, Getriebe, Gelenkwelle, Achsgetriebe, Antriebswellen der Räder) und/oder der Brennkraftmaschine - auf den Kraftstoffverbrauch getrennt ermitteln zu können. Bekannte Simulationsprogramme für Kraftfahrzeuge sind diesbezüglich nur bedingt einsetzbar, da diese detaillierte Kraftfahrzeugdaten - insbesondere Karten (d.h. motorparameterabhängige Tabellenspeicher oder Funktionen) des Motorkraftstoffverbrauchs - benötigen, deren Ermittlung aufwändig ist und die für Kraftfahrzeugtypen von Fremdherstellern in der Regel nicht verfügbar sind.

Vor diesem Hintergrund war es Aufgabe der vorliegenden Erfindung, ein Verfahren zum differenzierten Vergleich des Kraftstoffverbrauchs verschiedener Kraftfahrzeuge bereitzustellen, welches verhältnismäßig einfach durchzuführen ist und die Ermittlung des Einflusses verschiedener Fahrzeugkomponenten mit einer minimalen Anzahl von Messvorgängen ermöglicht.

Diese Aufgabe wird durch Verfahren mit den Merkmalen des Anspruchs 1 bzw. des Anspruchs 2 gelöst.

Vorteilhafte Ausgestaltungen sind in den Unteransprüchen enthalten.

Das erfindungsgemäße Verfahren zum differenzierten Vergleich des Kraftstoffverbrauchs eines Testfahrzeuges mit dem Kraftstoffverbrauch mindestens eines Vergleichsfahrzeuges umfaßt die folgenden vorbereitenden Schritte:

A) Messung eines Fahrwiderstandes ($\tau_T$) sowie eines Kraftstoffverbrauches ($F_T(\tau_T)$) eines Testfahrzeugs bei einem vorgegebenen Fahrprogramm, und
B) Messung eines Fahrwiderstandes ($\tau_{V\alpha}$) sowie eines Kraftstoffverbrauchs ($F_{V\alpha}(\tau_{V\alpha})$) für jedes an der Untersuchung teilnehmende Vergleichsfahrzeug bei vorgegebenen Fahrprogrammen ($\alpha=[1..n]$ mit n = Anzahl der Vergleichsfahrzeuge); Auswahl eines Fahrzeugs als Fahrzeug mit dem günstigsten Gesamtfahrwiderstand sowie Auswahl eines Fahrzeugs als Fahrzeug mit dem günstigsten Antriebsstrang.

Hinsichtlich des vorstehend genannten Auswahlschrittes ist anzumerken, daß dabei das Fahrzeug mit dem günstigsten Gesamtfahrwiderstand auch gleichzeitig das Fahrzeug mit dem günstigsten Antriebsstrang darstellen kann. Außerdem kann auch das Testfahrzeug als Fahrzeug mit dem günstigsten Antriebsstrang oder Gesamtfahrwiderstand ausgewählt werden.

Im Rahmen der Erfindung ist weiterhin eine

C) Messung eines ersten Simulationskraftstoffverbrauchs ($F_T(\tau_{VAero})$) des Testfahrzeuges bei Vorgabe des Fahrwiderstandes ($\tau_{VAero}$) des Vergleichsfahrzeuges mit dem günstigsten Gesamtfahrwiderstand bzw. eine
E) Messung eines dritten Simulationskraftstoffverbrauchs ($F_T(\tau_{Vantrieb})$) des Testfahrzeuges bei Vorgabe des Fahrwiderstandes ($\tau_{Vantrieb}$) des Vergleichsfahrzeuges mit dem günstigsten Antriebsstrang

vorgesehen.

Die Messungen C) und E) werden abhängig davon durchgeführt, ob ein Vergleich der Antriebsstränge oder ein Vergleich der Gesamtfahrwiderstände gewünscht wird. Bevorzugt werden im Rahmen der Erfindung beide Messungen durchgeführt. Falls allerdings das Fahrzeug mit dem günstigsten Gesamtfahrwiderstand und das Fahrzeug mit dem günstigsten Antriebsstrang zusammenfallen, so erübrigt sich eine der beiden Messungen C) und E).

Durch einen Vergleich des ersten Simulationskraftstoffverbrauchs ($F_T(\tau_{VAero})$) mit dem gemessenen Kraftstoffverbrauch des Testfahrzeuges ($F_T(\tau_T)$) kann der Einfluß der unterschiedlichen Karosserieeigenschaften ($K_T$, $K_V$) der verglichenen Kraftfahrzeuge auf den Kraftstoffverbrauch ermittelt werden.

Weiterhin kann durch einen Vergleich des dritten Simulationskraftstoffverbrauchs ($F_T(\tau_{VAntrieb})$) mit dem gemessenen Kraftstoffverbrauch des Fahrzeuges mit dem günstigsten Antriebsstrang ($F_{VAntrieb}(\tau_{VAntrieb})$) der Einfluß der unterschiedlichen Antriebsstränge ($A_T$, $A_{VAntrieb}$) der Kraftfahrzeuge auf den Kraftstoffverbrauch ermittelt werden.

Zur Verifikation der Messungen können weiterhin zusätzlich zu den Messungen in Schritt C) und/oder E) folgende Messungen vorgenommen werden:

D) Messung eines zweiten Simulationskraftstoffverbrauchs ($F_{VAero}(\tau_T)$) des Vergleichsfahrzeuges mit dem günstigsten Fahrwiderstand bei Vorgabe des Fahrwiderstandes ($\tau_T$)des Testfahrzeuges und/oder
F) Messung eines vierten Simulationskraftstoffverbrauchs ($F_{VAntrieb}(\tau_T)$) des Vergleichsfahrzeuges mit dem günstigsten Antriebsstrang bei Vorgabe des Fahrwiderstandes ($\tau_T$) des Testfahrzeuges.

Dabei wird Messung D) durchgeführt, sofern Messung C) durchgeführt wird und Messung F), falls Messung E) durchgeführt wurde.

Schließlich kann in vorteilhafter Ausgestaltung der Erfindung in einem weiteren Schritt eine Messung eines fünften Simulationskraftstoffverbrauchs ($F_{VAn}$trieb ($\tau_{VAero}$)) des Vergleichsfahrzeuges mit dem günstigsten Antriebsstrang bei Vorgabe des Fahrwiderstandes ($\tau_{VAero}$) des Vergleichsfahrzeuges mit dem günstigsten Gesamtfahrwiderstand erfolgen. Bei der Messung des fünften Simulationskraftstoffverbrauchs ($F_{VAntrieb}$($\tau_{VAero}$)) werden somit Karosserie- und Fahrwerkseigenschaften des aerodynamisch günstigsten, mit demjenigen Vergleichsfahrzeug kombiniert, welches den günstigsten Antriebsstrang besitzt. Diese Kombination kann zur Bestimmung realistischer Zielvorgaben für die Fahrzeugentwicklung benutzt werden.

Mit dem erfindungsgemäßen Verfahren kann das Testfahrzeug so betrieben werden, als verfüge es im Hinblick auf den Kraftstoffverbrauch über die Karosserie-, Reifen- und Fahrwerkseigenschaften des aerodynamisch günstigsten Vergleichsfahrzeuges; der Motor und die Kraftübertragung des Testfahrzeuges müssen nämlich in Schritt C) genau die Leistung erbringen, die den Fahrwiderstand des Vergleichsfahrzeuges bei Absolvierung des Fahrprogramms überwindet. In den Messungen wird daher eine hypothetische Situation simuliert, bei der das Testfahrzeug die aerodynamischen und Rollwiderstandseigenschaften des aerodynamisch günstigsten Vergleichsfahrzeuges aufweist. Analog kann das Vergleichsfahrzeug so getestet werden, als verfüge es über die Karosserie- und Reifeneigenschaften des Testfahrzeugs.

Hier sowie nachfolgend sollen mit dem Begriff "Kraftübertragung" sämtliche zwischen Motor und Rädern liegenden Übertragungsglieder - wie Kupplung, Getriebe, Gelenkwelle, Achsgetriebe, Antriebswellen der Räder etc. - bezeichnet werden. Der Motor und die Kraftübertragung sollen ferner gemeinsam als "Antriebsstrang" bezeichnet werden.

Im Rahmen der Erfindung können die bei den Messungen gewonnenen Daten für einen Vergleich genutzt werden, um den Einfluß der unterschiedlichen aerodynamischen und Rollwiderstandseigenschaften der verglichenen Kraftfahrzeuge auf den Kraftstoffverbrauch zu ermitteln. Die Differenz beispielsweise zwischen dem ersten Simulationskraftstoffverbrauch und dem gemessenen Kraftstoffverbrauch des Testfahrzeugs, ($F_T(\tau_{VAero})$)-($F_T(\tau_T)$) muß nämlich allein auf dem Unterschied des Fahrwiderstands von Testfahrzeug und Vergleichsfahrzeug beruhen, da bei beiden Kraftstoffverbrauchswerten derselbe Motor und dieselbe Kraftübertragung eingesetzt wurde.

Gemäß einer anderen Weiterbildung des Verfahrens wird ein Vergleich des ermittelten dritten Simulationskraftstoffverbrauchs ($F_T(\tau_{VAntrieb})$) mit dem Kraftstoffverbrauch des Fahrzeugs mit dem günstigsten Antriebsstrang ($F_{VAntrieb}(\tau_{VAntrieb})$) vorgenommen, um den Einfluß der unterschiedlichen Antriebsstränge (Brennkraftmaschine und Kraftübertragungen) der zu vergleichenden Kraftfahrzeuge zu ermitteln. Diese Differenz kann wiederum lediglich auf den unterschiedlichen Antriebssträngen der verglichenen Kraftfahrzeuge beruhen, da die beiden Verbrauchswerte bei demselben Fahrwiderstand ($\tau_{VAntrieb}$) ermittelt wurden.

Das Verfahren kann ferner unter Einsatz eines Simulationsprogramms für das Testfahrzeug derart weiterentwickelt werden, daß eine Differenzierung der Einflüsse von Motor und Kraftübertragung möglich ist. Dazu wird mit Hilfe eines numerischen Simulationsprogramms des Testfahrzeuges und mit Hilfe bekannter Daten der Kraftübertragung der Vergleichsfahrzeuge der Einfluß der unterschiedlichen Übersetzungsverhältnisse von Testfahrzeug und Vergleichsfahrzeug auf die Kraftstoffverbrauchswerte ermittelt. Wichtig ist dabei, daß für diese Berechnungen keine Kenntnisse der Motorparameter - wie etwa der Kraftstoffkarten des Vergleichsfahrzeuges - erforderlich sind, da diesbezüglich die bekannten Daten des Testfahrzeuges eingesetzt werden können.

Im Folgenden wird die Erfindung anhand eines Beispiels und anhand der Zeichnungen detaillierter erläutert. Es zeigen:

Fig. 1 schematisch die zum Kraftstoffverbrauch beitragenden Systemkomponenten eines Testfahrzeuges und zweier Vergleichsfahrzeuge;

Fig. 2 ein Diagramm mit den Gesamtfahrwiderstandsdaten von vier Vergleichsfahrzeugen, und

Fig. 3 ein Diagramm zur Erläuterung der Messung des Karosserieeinflusses auf den Kraftstoffverbrauch.

**EP 1 429 133 B1**

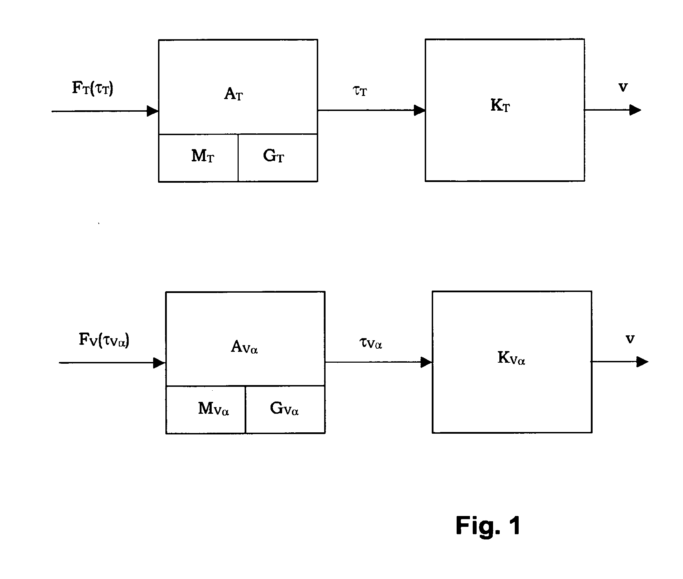

In den schematischen Blockdiagrammen gemäß Fig. 1 führen die zum Testfahrzeug gehörenden Größen den Index T und die zu den Vergleichsfahrzeugen die Indizes $V_\alpha$ [$\alpha$ = 1..n mit n = Anzahl der zu untersuchenden Vergleichsfahrzeuge, bzw. $\alpha$ = Unterscheidungsmerkmal].

Bei der Messung eines standardisierten Kraftstoffverbrauchs des Testfahrzeugs wird dem Antriebsstrang $A_T$ des Testfahrzeuges eine Kraftstoffmenge $F_T$ zug e-führt, welche an den Antriebsrädern des Testfahrzeuges zur Abgabe eines Drehmomentes $\tau_T$ fü hrt. Der Antriebsstrang $A_T$ setzt sich aus der Brennkraftmaschine beziehungsweise dem Motor $M_T$ und der daran anschließenden Kraftübertragung $G_T$ zusammen (Kupplung, Getriebe, etc.).

Das Drehmoment $\tau_T$ an den Antriebsrädern führt in Abhängigkeit von den Eigenschaften der Karosserie $K_T$ des Testfahrzeuges (Rollwiderstand, Strömungswiderstand etc.) zu einer Fahrzeuggeschwindigkeit v. Bei der Absolvierung eines bestimmten Fahrprogramms wird in der Regel ein Verlauf dieser Geschwindigkeit v vorgegeben, und es wird untersucht, welche Kraftstoffmenge $F_T$ dabei insgesamt zugeführt werden muß.

Die vorstehend für das Testfahrzeug gegebenen Erläuterungen der Figur gelten analog auch für die Vergleichsfahrzeuge $V_{Aero}$ und $V_{Antrieb}$.

Das erfindungsgemäße Verfahren zum Vergleich der Kraftstoffverbrauchswerte verschiedener Fahrzeuge, insbesondere eines Testfahrzeuges aus der Eigenproduktion eines Herstellers und mindestens eines Vergleichsfahrzeuges aus der Produktion eines anderen Herstellers, umfaßt vorzugsweise die folgenden Schritte:

1. Schritt: Fahrzeugvorauswahl

In einem ersten Schritt werden nach bestimmten Kriterien Vergleichsfahrzeuge ausgewählt, welche mit dem Testfahrzeug hinsichtlich des Kraftstoffverbrauchs verglichen werden sollen. Als Vergleichsfahrzeuge kommen dabei insbesondere solche mit bekanntermaßen guter Kraftstoffausnutzung beziehungsweise mit hoher Marktbeliebtheit in Frage. Die Motorkapazität und der Leistungsbereich sollten nicht mehr als $\pm 10$ % von den Daten des Testfahrzeuges abweichen. Weiterhin kann dasjenige Fahrzeug als Vergleichsfahrzeug hinzugenommen werden, welches das kleinste Verhältnis von maximaler Leistung zu Maximalgeschwindigkeit aufweist. Mit diesen und ähnlichen Kriterien wird sichergestellt, daß nur eine möglichst geringe und möglichst aussagekräftige Anzahl von Vergleichsfahrzeugen an den Untersuchungen teilnimmt.

2. Schritt: Kraftstoffverbrauch bei eigenem Fahrwiderstand

Sodann werden mit dem Testfahrzeug und den in Schritt 1 ausgewählten Vergleichsfahrzeugen sorgfältige Messungen des Fahrwiderstandes ("road load") durchgeführt. Der Fahrwiderstand kann insbesondere über das Antriebsmoment $\tau$ an den Antriebsrädern quantifiziert werden. Hierzu können, wie aus dem Stand der Technik bekannt, sog. Drehmomentmeßnaben eingesetzt werden, die eine Messung der auf die angetriebenen Räder des Fahrzeugs ausgeübten Drehmomente erlauben. Eine andere bekannte Methode zur Bestimmung des Fahrwiderstandes ist die sog. Coast-Down-Methode (Ausrollversuch), bei der das mit einem genauen Geschwindigkeitssensor ausgerüstete Fahrzeug im Leerlauf auf einer geraden und ebenen Meßstrecke aus hoher Geschwindigkeit ausläuft, wobei der zeitliche Verlauf der Geschwindigkeit gemessen wird. Im Gegensatz zur Drehmomentmeßmethode beeinflussen bei der Coast-Down-Methode zusätzlich die Antriebsstrangverluste von der Felge bis hin zur Getriebeausgangswelle das Meßergebnis.

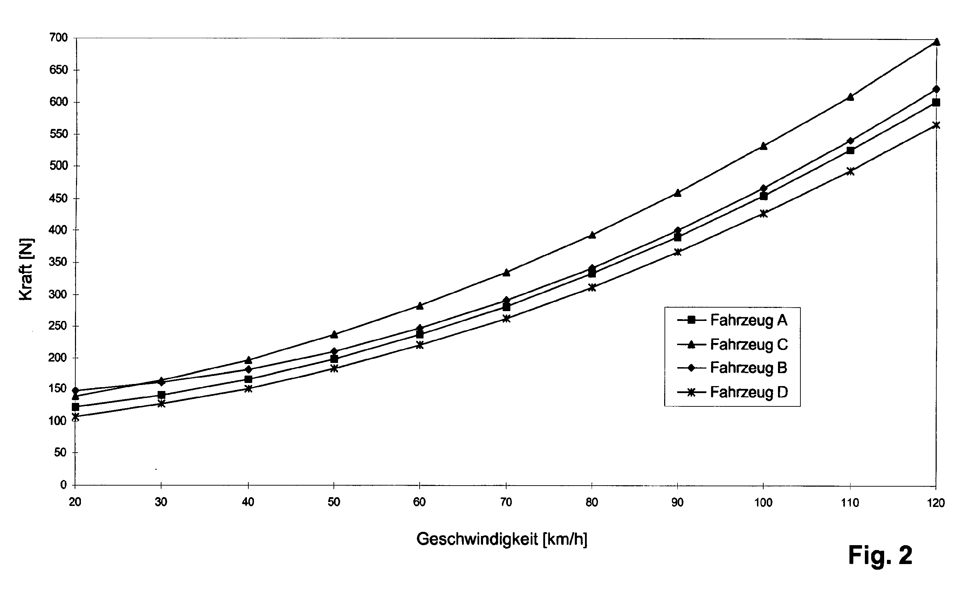

Durch einen qualitativen Vergleich der Messungen läßt sich der "Aero-Beste" bestimmen, d.h. das Vergleichsfahrzeug mit den günstigsten aerodynamischen Karosserieeigenschaften sowie der "Antriebs-Beste", d. h. das Fahrzeug mit den günstigsten (geringsten) Verlusten im Antriebsstrang. Diese Bestimmung kann über eine Bewertung der geschwindigkeitsabhängigen Fahrwiderstandskurven ermittelt werden, z.B. durch eine Betrachtung der Fahrwiderstände bei geringen (größerer Einfluß der Rollwiderstände) und bei höheren Geschwindigkeiten (größerer Einfluß der Aerodynamik). In Figur 2 sind derartige Fahrwiderstandskurven für vier Fahrzeuge dargestellt. In diesem speziellen Falle ist das Fahrzeug D sowohl hinsichtlich des Rollwiderstandes, als auch hinsichtlich der Aerodynamik den anderen Fahrzeugen überlegen, wohingegen das Fahrzeug C (in diesem Falle das Testfahrzeug) die schlechteste Aerodynamik aufweist.

Aus den Fahrwiderständen sämtlicher beteiligter Fahrzeuge werden anschließend Daten zur Einstellung eines Fahrzeug-Dynamometers bzw. eines Rollenprüfstandes ermittelt. Dies bedeutet, daß die Bremskraft eines Rollenprüfstandes geschwindigkeitsabhängig derart vorgegeben wird, daß der Einfluß der Karosserie (d. h. die Aerodynamik) auf dem Prüfstand simuliert wird. Hierzu werden bevorzugt auch bei den Fahrzeugen auf dem Prüfstand Drehmomentmeßnaben eingesetzt. Die Bremskraft des Rollenprüfstandes wird so eingestellt, daß die Drehmomentmeßnaben bei gegebener Geschwindigkeit möglichst exakt den im Straßentest ermittelten Fahrwiderstand erfahren. In der Regel ist ein iterativer Anpassungsprozeß erforderlich, um eine genaue Einstellung des Rollenprüfstandes zu erzielen.

Schließlich werden Kraftstoffverbrauchsdaten für alle beteiligten Fahrzeuge gemäß einem vorgegebenen standardisierten Fahrprogramm wie etwa NEFZ, EPA75, HWFET, 90/120 km/h stationär, im Leerlauf oder gemäß einer sonstigen Vorgabe ermittelt. Hieraus ergeben sich erste bzw. weitere Hinweise auf das Vergleichsfahrzeug mit dem günstigsten Antriebsstrang.

Schritt 3: Einfluß der Karosserieeigenschaften auf den Kraftstoffverbrauch

Das Testfahrzeug wird in einem weiteren Schritt auf einem Rollenprüfstand derart betrieben, daß es den Fahrwiderstand ($\tau_{VAero}$) desjenigen Vergleichs- fahrzeuges $V_{Aero}$ mit dem geringsten Roll- und Luftwiderstand überwinden muß (und umgekehrt). Dabei wird ein "Simulations-" Kraftstoffverbrauch ($F_T(\tau_{VAero})$) ge- messen, welcher ausdrückt, wie viel Kraftstoff das Testfahrzeug verbrauchen würde, wenn es dieselben aerodynamischen sowie Rollwiderstandseigenschaften wie das Vergleichsfahrzeug aufweisen würde. Dieser Wert wird dann mit dem in Schritt 2 ermittelten Verbrauch $F_T$ ($\tau_T$) des Testfahrzeuges (bei "eigenem" Fahrwiderstand) verglichen. Insbesondere kann hierzu die Differenz

$$(F_T(\tau_T)) - (F_T(\tau_{VAero}))$$

gebildet werden, welche den isolierten Einfluß der Karosserie auf den Kraftstoffverbrauch des Testfahrzeuges wiedergibt.

Des Weiteren kann der Simulationskraftstoff- verbrauch ($F_{VAero}(\tau_T)$) mit dem in Schritt 2 ermittelten Kraftstoffverbrauch des Vergleichsfahrzeuges "Aero- Bester" verglichen werden. Die Differenz

$$(F_{Vaero}(\tau_T)) - (F_{VAero}(\tau_{VAero}))$$

Verifiziert den isolierten Einfluß der Karosserie ($K_T$ bzw. $K_{VAero}$) auf den Kraftstoffverbrauch.

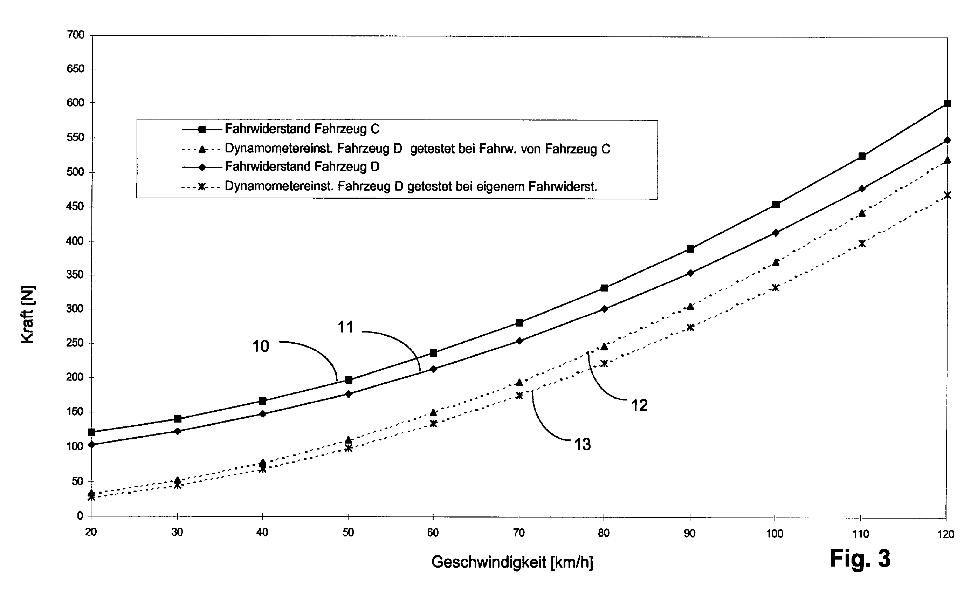

Eine entsprechende beispielhafte Vergleichsmessung anhand der Fahrzeuge C (Testfahrzeug) und D (Aero-Bester) ist in Figur 3 anhand eines Drehmoment- /Geschwindigkeitsdiagramms dargestellt (die gemessenen Verbrauchsdaten sind nicht dargestellt). In Figur 3 sind in den Kurven 10 und 11 nochmals die Road-Load- Werte für die Fahrzeuge C und D entsprechend der Darstellung in Figur 2 dargestellt. Die weiteren Kurven 12 und 13 von Figur 3 zeigen die an den Dynamometer- Rollen vorgegebenen Bremskräfte. Die Kurve 13 entspricht der Dynamometer-Einstellung, die zur Simulation der Fahrwiderstandskurve des Fahrzeugs D für dasselbe Fahrzeug D auf dem Prüfstand erforderlich ist. Im Vergleich hierzu ist in Kurve 12 die Situation dargestellt, bei der das aerodynamisch günstigste Fahrzeug D mit der "fremden" Fahrwiderstandskurve des Testfahrzeugs C getestet wurde. Die Differenz aus Kurve [11 und 13] stellt hierbei die Reifenverluste der angetriebenen Räder auf dem Prüfstand, bzw. im Falle der Ermittlung der Gesamtfahrwiderstände über die Coast-Down-Methode die Summe aus Reifenverlusten der angetriebenen Räder sowie der Antriebsstrangverluste dar und ist gleich groß der Differenz aus den Kurven [10 und 12].

Schritt 4: Einfluß des Antriebsstranges auf den Kraftstoffverbrauch

Für diesen Schritt wird mit dem Fahrzeug ($V_{Antrieb}$) mit dem hinsichtlich des Kraftstoffverbrauchs optimalen Antriebsstrang eine Messung durchgeführt, bei dem es auf dem Rollenprüfstand dem in Schritt 2 ermittelten Fahrwiderstand $\tau_T$ des Testfahrzeuges aus- gesetzt wird. Unter diesen Bedingungen wird der Simu- lationskraftstoffverbrauch ($F_{VAntrieb}(\tau_T)$) ermittelt, wel- cher den Kraftstoffverbrauch des Vergleichsfahrzeugs ($V_{Antrieb}$) beschreibt, falls es dieselben Gesamtfahrwiderstandseigenschaften wie das Testfahrzeug besäße.

Sodann wird der zweite Simulationskraftstoff- verbrauch ($F_{VAntrieb}(\tau_T)$) mit dem in Schritt 2 ermittelten tatsächlichen Kraftstoffverbrauch des Testfahrzeuges verglichen. Insbesondere drückt dabei die Differenz

$$(F_T(\tau_T)) - (F_{VAntrieb}(\tau_T))$$

den Einfluß der unterschiedlichen Antriebsstränge $A_T$, $A_{VAntrieb}$ auf den Kraftstoffverbrauch aus.

Schritt 5: Einfluß der Gesamtübersetzung auf den Kraftstoffverbrauch

Um die Einflüsse der unterschiedlichen Getriebeübersetzungen im Antriebsstrang der Test- und Vergleichsfahrzeuge zu berücksichtigen, wird bei diesem Schritt ein numerisches Simulationsprogramm für das Testfahrzeug verwendet, wobei nur sämtliche Parameter des Testfahrzeuges - wie insbesondere die Motorkraftstoffkarten - vorhanden sein müssen. Sodann erhält das Simulationsprogramm die Antriebsstrang-Daten des Vergleichsfahrzeuges - wie insbesondere die Getriebedaten und die Radgrößen des Vergleichsfahrzeuges -, um den Effekt des Getriebes, d.h. der Gesamtüberset- zungsverhältnisse auf den Kraftstoffverbrauch heraus- rechnen zu können. Auf diese Weise lassen sich die zu- vor gewonnenen Messergebnisse des Kraftstoffver- brauchs in Bezug auf die unterschiedlichen Getriebeauslegungen etc. der verglichenen Fahrzeuge korrigieren, so daß die korrigierten Daten den reinen Einfluß des Motors auf den Kraftstoffverbrauch wiederspiegeln.

Schritt 6: Ultimative Zielvorgabe für den Kraftstoffverbrauch

Das Vergleichsfahrzeug $V_{Antrieb}$ mit dem optimalen Antriebsstrang wird auf dem Rollenprüfstand derart betrieben, dass es den in Schritt 2 für das Vergleichsfahrzeug $V_{Aero}$ mit den besten aerodynamischen Eigenschaften ("Aero-Bester") ermittelten Fahrwiderstand $\tau_{VAero}$ überwindet. Der hierbei gemessene Simulations- kraftstoffverbrauch ($F_{VAntrieb}(\tau_{VAero})$) stellt dann eine erste Zielvorgabe dar, welche den besten Antriebsstrang mit der besten Karosserie kombiniert. Diese Daten können zusätzlich noch in der vorstehend erläuterten Weise hinsichtlich der Unterschiede der Kraftübertragungen korrigiert werden. Der Vergleich dieser Daten mit den Daten des Testfahrzeuges liefert dann einen realistischen Anhaltspunkt für das noch ausschöpfbare Entwicklungspotential.

Das vorstehend beschriebene Verfahren führt mit verhältnismäßig geringem Aufwand und ohne Kenntnis detaillierter interner Daten der Vergleichsfahrzeuge zu einem differenzierten Vergleich der Kraftstoffverbrauchswerte. Insbesondere kann der Einfluß des Motors als solcher bestimmt werden, ohne daß hierzu die Kenntnis der Motorkraftstoffkarten der Vergleichsfahrzeuge erforderlich ist.

Die Durchführung des Verfahrens kann zusätzlich verkürzt werden, wenn das Testfahrzeug gleichzeitig das beste Fahrzeug hinsichtlich der aerodynamischen Eigenschaften und/oder des Antriebsstranges ist. Ebenso kann das Verfahren verkürzt werden, wenn unter den Vergleichsfahrzeugen eines sowohl das beste hinsichtlich der aerodynamischen Eigenschaften als auch hinsichtlich des Antriebsstranges ist.

**Patentansprüche**

1.　Verfahren zum differenzierten Vergleich des Kraftstoffverbrauchs eines Testfahrzeugs mit demjenigen mindestens eines Vergleichsfahrzeugs durch Betreiben des Testfahrzeugs auf einem Rollenprüfstand mit der simulierten Vorgabe des Fahrwiderstandes eines Vergleichfahrzeugs mit dem geringsten Fahrwiderstand, mit den Schritten:

　　A) Messung eines Fahrwiderstandes ($\tau_T$) sowie eines Kraftstoffverbrauchs ($F_T((\tau_T))$) eines Testfahrzeugs bei vorgegebenen Fahrprogrammen;
　　B) Messung eines Fahrwiderstandes ($\tau_{V\alpha}$) sowie eines Kraftstoffverbrauchs ($F_{V\alpha}((\tau_{V\alpha}))$) für jedes an der Untersuchung teilnehmende Vergleichsfahrzeug bei vorgegebenen Fahrprogrammen ($\alpha=[1..n]$ mit n = Anzahl der Vergleichsfahrzeuge); Auswahl eines Fahrzeugs als Fahrzeug mit dem günstigsten Gesamtfahrwiderstand sowie Auswahl eines Fahrzeugs als Fahrzeug mit dem günstigsten Antriebsstrang,
　　C) Messung eines ersten Simulationskraftstoffverbrauchs ($F_T(\tau_{Vaero})$) des Testfahrzeugs bei Vorgabe des Fahrwiderstandes ($\tau_{Vaero}$) des Vergleichsfahrzeugs mit dem günstigsten Gesamtfahrwiderstand, und
　　H) Vergleich des ersten Simulationskraftstoffverbrauchs ($F_T(\tau_{VAero})$) mit dem gemessenen Kraftstoffverbrauch des Testfahrzeugs ($F_T(\tau_T)$), um den Einfluss der unterschiedlichen Karosserieeigenschaften ($K_T$, $K_V$) der verglichenen Kraftfahrzeuge auf den Kraftstoffverbrauch zu ermitteln.

2.　Verfahren zum differenzierten Vergleich des Kraftstoffverbrauchs eines Testfahrzeugs mit demjenigen mindestens eines Vergleichsfahrzeugs durch Betreiben des Testfahrzeugs auf einem Rollenprüfstand mit der simulierten Vorgabe des Fahrwiderstandes eines Vergleichsfahrzeugs mit dem geringsten Fahrwiderstand, mit den Schritten:

　　A) Messung eines Fahrwiderstandes ($\tau_T$) sowie eines Kraftstoffverbrauchs ($F_T((\tau_T))$) eines Testfahrzeugs bei vorgegebenen Fahrprogrammen;
　　B) Messung eines Fahrwiderstandes ($\tau_{V\alpha}$) sowie eines Kraftstoffverbrauchs ($F_{V\alpha}((\tau_{V\alpha}))$) für jedes an der Untersuchung teilnehmende Vergleichsfahrzeug bei vorgegebenen Fahrprogrammen ($\alpha=[1..n]$ mit n = Anzahl der Vergleichsfahrzeuge); Auswahl eines Fahrzeugs als Fahrzeug mit dem günstigsten Gesamtfahrwiderstand sowie Auswahl eines Fahrzeugs als Fahrzeug mit dem günstigsten Antriebsstrang;
　　E) Messung eines dritten Simulationskraftstoffbrauchs ($F_T(\tau_{VAntrieb})$) des Testfahrzeuges bei Vorgabe des Fahrwiderstandes ($\tau_{VAntrieb}$) des Vergleichsfahrzeuges mit dem günstigsten Antriebsstrang, und Vergleich des
　　J) dritten Simulationskraftstoffverbrauchs ($F_T(\tau_{VAntrieb})$) mit dem gemessenen Kraftstoffverbrauch des Fahrzeuges mit dem günstigsten Antriebsstrang ($F_{VAntrieb}(\tau_{VAntrieb})$), um den Einfluss der unterschiedlichen Antriebsstränge ($A_T$, $A_{VAntrieb}$) der Kraftfahrzeuge auf den Kraftstoffverbrauch zu ermitteln.

3.　Verfahren nach Anspruch 1 oder 2, mit den Schritten

　　D) Messung eines zweiten Simulationskraftstoffverbrauchs ($F_{Vaero}(\tau_T)$) des Vergleichsfahrzeuges mit dem günstigsten Gesamtfahrwiderstand bei Vorgabe des Fahrwiderstandes ($\tau_T$) des Testfahrzeuges, und
　　I) Vergleich des zweiten Simulationskraftstoffverbrauchs ($F_{VAero}(\tau T)$) mit dem gemessenen Kraftstoffverbrauch des Fahrzeugs mit dem günstigsten Gesamtfahrwiderstand ($F_{VAero}(\tau_{VAero})$), um den Einfluss der unterschiedlichen Karosserieeigenschaften ($K_T$, $K_V$) der verglichenen Kraftfahrzeuge auf den Kraftstoffverbrauch zu verifizieren.

4.　Verfahren nach einem der Ansprüche 1 bis 3, **gekennzeichnet durch**

　　F) Messung eines vierten Simulationskraftstoffverbrauchs ($F_{VAntrieb}(\tau_T)$) des Vergleichsfahrzeugs mit dem günstigsten Antriebsstrang bei Vorgabe des Fahrwiderstandes ($\tau_T$) des Test-

fahrzeugs, und Vergleich des
K) vierten Simulationskraftstoffverbrauchs ($F_{VAntrieb}(\tau_T)$) mit dem gemessenen Kraftstoffverbrauch des Testfahrzeugs ($F_T(\tau_T)$), um den Einfluss der unterschiedlichen Antriebsstränge ($A_T$, $A_{VAntrieb}$) der Kraftfahrzeuge auf den Kraftstoffverbrauch zu verifizieren.

**5.** Verfahren nach einem der Ansprüche 1 bis 4, **gekennzeichnet durch** die Schritte

G) Messung eines fünften Simulationskraftstoffverbrauchs ($F_{VAntrieb}(\tau_{VAero})$) des Vergleichsfahrzeugs mit dem günstigsten Antriebsstrang bei Vorgabe des Fahrwiderstandes ($\tau_{VAero}$) des Vergleichsfahrzeugs mit dem günstigsten Gesamtfahrwiderstand, und Vergleich des
L) fünften Simulationskraftstoffverbrauchs ($F_{Vantrieb}(\tau_{VAero})$) mit dem gemessenen Kraftstoffverbrauch des Testfahrzeugs ($F_T(\tau_T)$), um den Effekt von optimalem Antriebsstrang in Kombination mit den günstigsten Karosserieeigenschaften im Vergleich zum Testfahrzeug zu quantifizieren.

**6.** Verfahren nach mindestens einem der Ansprüche 1 bis 5, **dadurch gekennzeichnet, dass** mit Hilfe eines das Testfahrzeug beschreibenden Simulationsprogramms sowie bekannter Daten der Kraftübertragung des Vergleichsfahrzeugs der Einfluss der unterschiedlichen Kraftübertragungen von Testfahrzeug und Vergleichsfahrzeug auf die Kraftstoffverbrauchswerte ermittelt wird.

**Claims**

**1.** Method for the differentiated comparison of the fuel consumption of a test vehicle with that of at least one comparison vehicle by operating the test vehicle on a roller test bench with the simulated preset road resistance of a comparison vehicle with the least road resistance, comprising the steps of:

A) Measuring a road resistance ($\tau_T$) and a fuel consumption ($F_T(\tau_T)$) of a test vehicle using predetermined driving programs;
B) Measuring a road resistance ($\tau_{V\alpha}$) and a fuel consumption ($F_{V\alpha}(\tau_{V\alpha})$) for each comparison vehicle participating in the test using predetermined driving programs $\alpha=[1..n]$ where n = number of comparison vehicles); selecting a vehicle as the vehicle having the most favorable overall road resistance and selecting a vehicle as the vehicle having the most favorable drive train,
C) Measuring a first simulated fuel consumption ($F_T(\tau_{VAero})$) of the test vehicle for a preset road resistance ($\tau_{VAero}$) of the comparison vehicle with the most favorable overall road resistance; and
H) Comparing the first simulated fuel consumption ($F_T(\tau_{VAero})$) with the measured fuel consumption of the test vehicle ($F_T(\tau_T)$), in order to determine the influence of the various body properties ($K_T$, $K_V$) of the compared motor vehicles on the fuel consumption.

**2.** Method for the differentiated comparison of the fuel consumption of a test vehicle with that of at least one comparison vehicle by operating the test vehicle on a roller test bench with the simulated preset road resistance of a comparison vehicle with the least road resistance, comprising the steps of:

A) Measuring a road resistance ($\tau_T$) and a fuel consumption ($F_T(\tau_T)$) of a test vehicle using predetermined driving programs;
B) Measuring a road resistance ($\tau_{V\alpha}$) and a fuel consumption ($F_{V\alpha}(\tau_{V\alpha})$) for each comparison vehicle participating in the test using predetermined driving programs $\alpha=[1..n]$ where n = number of comparison vehicles); selecting a vehicle as the vehicle having the most favorable overall road resistance and selecting a vehicle as the vehicle having the most favorable drive train,
E) Measuring a third simulated fuel consumption $F_T(\tau_{VDrive})$) of the test vehicle for a preset road resistance ($\tau_{VDrive}$) of the comparison vehicle with the most favorable drive train, and comparing the
J) Third simulated fuel consumption ($F_T(\tau_{VDrive})$) with the measured fuel consumption of the vehicle with the most favorable drive train ($V_{VDrive}(\tau_{VDr}ive)$), in order to determine the influence of the different drive trains ($A_T$, $A_{VDrive}$) of the motor vehicles on the fuel consumption.

**3.** Method according to Claim 1 or 2, comprising the steps of

D) Measuring a second simulated fuel consumption ($F_{VAero}(\tau_T)$) of the comparison vehicle with the most favorable overall road resistance for a preset road resistance ($\tau_T$) of the test vehicle, and
I) Comparing the second simulated fuel consumption ($F_{Aero}(\tau_T)$) with the measured fuel consumption of the vehicle with the most favorable overall driving resistance ($F_{VAero}(\tau_{VAero})$), in order to verify the influence of the various body properties ($K_T$, $K_V$) of the compared motor vehicles on the fuel consumption.

**4.** Method according to one of Claims 1 to 3, **charac-**

**terized by**

F) Measuring a fourth simulated fuel consumption ($F_{VDrive}(\tau_T)$) of the comparison vehicle with the most favorable drive train for a preset road resistance ($\tau_T$) of the test vehicle, and comparing the

K) Fourth simulated fuel consumption ($Fv_{Drive}(\tau_T)$) with the measured fuel consumption of the test vehicle ($F_T(\tau_T)$), in order to verify the influence of the different drive trains (AT, $A_{VDrive}$) of the motor vehicles on the fuel consumption.

5. Method according to one of Claims 1 to 4, **characterized by** the steps of

G) Measuring a fifth simulated fuel consumption ($F_{VDrive}(\tau_{VAero})$) of the comparison vehicle with the most favorable drive train for a preset road resistance ($\tau_{VAero}$) of the comparison vehicle with the most favorable overall road resistance, and comparing the

L) Fifth simulated fuel consumption ($F_{Drive}(\tau_{VAero})$) with the measured fuel consumption of the test vehicle ($F_T(\tau_T)$), in order to quantify the effect of an optimum drive train in combination with the most favorable body properties compared to the test vehicle.

6. Method according to at least one of Claims 1 to 5, **characterized in that** the influence of the different power trains of test vehicle and comparison vehicle on the fuel consumption values is determined with the aid of a simulation program which describes the test vehicle and known data relating to the power train of the comparison vehicle.

**Revendications**

1. Procédé de comparaison différentielle de la consommation de carburant d'un véhicule de test avec celle d'au moins un véhicule de comparaison en faisant fonctionner le véhicule de test sur un banc d'essai à rouleaux avec la consigne simulée de la résistance au roulement d'un véhicule de comparaison ayant la résistance au roulement la plus faible, comprenant les étapes suivantes :

A) mesure d'une résistance au roulement ($\tau_T$) et d'une consommation de carburant ($F_T(\tau_T)$) d'un véhicule de test à des programmes de conduite prédéfinis ;
B) mesure d'une résistance au roulement ($\tau_{V\alpha}$) et d'une consommation de carburant ($F_{V\alpha}(\tau_{V\alpha})$) pour chaque véhicule de comparaison qui participe à l'examen à des programmes de conduite prédéfinis ($\alpha$ = [1..n] avec n = nombre de véhicules de comparaison) ; sélection d'un véhicule comme véhicule ayant la résistance au roulement totale la plus favorable et sélection d'un véhicule comme véhicule ayant la chaîne motrice la plus favorable ;
C) mesure d'une première consommation de carburant simulée ($F_T(\tau_{Vaero})$) du véhicule de test avec consigne de la résistance au roulement ($\tau_{Vaero}$) du véhicule de comparaison ayant la résistance au roulement totale la plus favorable, et
H) comparaison de la première consommation de carburant simulée ($F_T(\tau_{Vaero})$) avec la consommation de carburant mesurée du véhicule de test ($F_T(\tau_T)$) afin de déterminer l'influence des différentes propriétés de la carrosserie ($K_T$, $K_V$) des véhicules automobiles comparés sur la consommation de carburant.

2. Procédé de comparaison différentielle de la consommation de carburant d'un véhicule de test avec celle d'au moins un véhicule de comparaison en faisant fonctionner le véhicule de test sur un banc d'essai à rouleaux avec la consigne simulée de la résistance au roulement d'un véhicule de comparaison ayant la résistance au roulement la plus faible, comprenant les étapes suivantes :

A) mesure d'une résistance au roulement ($\tau_T$) et d'une consommation de carburant ($F_T(\tau_T)$) d'un véhicule de test à des programmes de conduite prédéfinis ;
B) mesure d'une résistance au roulement ($\tau_{V\alpha}$) et d'une consommation de carburant ($F_{V\alpha}(\tau_{V\alpha})$) pour chaque véhicule de comparaison qui participe à l'examen à des programmes de conduite prédéfinis ($\alpha$ = [1..n] avec n = nombre de véhicules de comparaison) ; sélection d'un véhicule comme véhicule ayant la résistance au roulement totale la plus favorable et sélection d'un véhicule comme véhicule ayant la chaîne motrice la plus favorable ;
E) mesure d'une troisième consommation de carburant simulée ($F_T(\tau_{Antrieb})$) du véhicule de test avec consigne de la résistance au roulement ($\tau_{VAntrieb}$) du véhicule de comparaison ayant la chaîne motrice la plus favorable, et
J) comparaison de la troisième consommation de carburant simulée ($F_T(\tau_{VAntrieb})$) avec la consommation de carburant mesurée du véhicule ayant la chaîne motrice la plus favorable ($F_{VAntrieb}(\tau_{VAntrieb})$) afin de déterminer l'influence des différentes chaînes motrices ($A_T$, $A_{VAntrieb}$) des véhicules automobiles sur la consommation de carburant.

3. Procédé selon la revendication 1 ou 2, comprenant les étapes suivantes :

D) mesure d'une deuxième consommation de carburant simulée ($F_{Vaero}(\tau_T)$) du véhicule de comparaison ayant la résistance au roulement totale la plus favorable avec consigne de la résistance au roulement ($\tau_T$) du véhicule de test, et

I) comparaison de la deuxième consommation de carburant simulée ($F_{Vaero}(\tau_T)$) avec la consommation de carburant mesurée du véhicule ayant la résistance au roulement totale la plus favorable ($F_{VAero}(\tau_{VAero})$) afin de vérifier l'influence des différentes propriétés de la carrosserie ($K_T$, $K_V$) des véhicules automobiles comparés sur la consommation de carburant.

4. Procédé selon l'une des revendications 1 à 3, **caractérisé par**

F) la mesure d'une quatrième consommation de carburant simulée ($F_{VAntrieb}(\tau_T)$) du véhicule de comparaison ayant la chaîne motrice la plus favorable avec consigne de la résistance au roulement ($\tau_T$) du véhicule de test, et

K) la comparaison de la quatrième consommation de carburant simulée ($F_{VAntrieb}(\tau_T)$) avec la consommation de carburant mesurée du véhicule de test ($F_T(\tau T)$) afin de vérifier l'influence des différentes chaînes motrices ($A_T$, $A_{VAntrieb}$) des véhicules automobiles sur la consommation de carburant.

5. Procédé selon l'une des revendications 1 à 4, **caractérisé par** les étapes suivantes :

G) mesure d'une cinquième consommation de carburant simulée ($F_{VAntrieb}(\tau_{VAero})$) du véhicule de comparaison ayant la chaîne motrice la plus favorable avec consigne de la résistance au roulement ($\tau_{VAero}$) du véhicule de comparaison ayant la résistance au roulement totale la plus favorable, et

L) comparaison de la cinquième consommation de carburant simulée ($FV_{Antrieb}(\tau_{VAero})$) avec la consommation de carburant mesurée du véhicule de test ($F_T(\tau_T)$) afin de quantifier l'effet de la chaîne motrice optimale en combinaison avec les propriétés de carrosserie les plus favorables en comparaison du véhicule de test.

6. Procédé selon au moins l'une des revendications 1 à 5, **caractérisé en ce que** l'influence des différentes transmissions de forces du véhicule de test et du véhicule de comparaison sur les valeurs de la consommation de carburant est déterminée à l'aide d'un programme de simulation qui décrit le véhicule de test ainsi que de données connues de la transmission de forces du véhicule de comparaison.

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0062211 A